# EUROPÄISCHE PATENTANMELDUNG

(11) **EP 0 940 607 A2**
(43) Veröffentlichungstag der Anmeldung: **08.09.1999**
(21) Anmeldenummer: 99101941.5
(22) Anmeldetag: 29.01.1999
(51) Int. Cl.: F16J 9/20

(54) **Ölabstreifkolbenring**

(30) Priorität: 27.02.1998 DE 19808484
(71) Anmelder: Federal-Mogul Burscheid GmbH, 51399 Burscheid (DE)
(72) Erfinder: Brillert, Hans Rainer, 51399 Burscheid (DE); Risch, Hans-Joachim, 42499 Hückeswagen (DE)

(57) **Zusammenfassung**

Die Erfindung betrifft einen Ölabstreifkolbenring 1 für Brennkraftmaschinen, bestehend aus einem flexiblen, einen U-förmigen Querschnitt aufweisenden Metallband, mit radial gerichteten, federnden Schenkeln 3, 3'. Im U-förmigen Raum ist ein Kunststoff-Montagering 5 angeordnet, der sich bei Betrieb der Brennkraftmaschine auflöst.

## Beschreibung

Die Erfindung betrifft einen Ölabstreifkolbenring für Brennkraftmaschinen, bestehend aus einem ringförmig gebogenem Metallband mit einem nach radial außen offenen U-förmigen Querschnittsprofil und vom Außendurchmesser abwechselnd von oben oder von unten nach innen sich erstreckende Einschnitte, so daß radial gerichtete federnde Schenkel gebildet sind, die über Stege miteinander verbunden sind.

Aus der DE PS 875 892 ist ein gattungsgemäßer Ölabstreifkolbenring zu entnehmen. Derartige aus Federstahl gebildete Kolbenringe zeichnen sich durch besonders gute federnde Eigenschaften aus, sowohl in radialer, in Umfangs- und in axialer Richtung. Diese Eigenschaften werden dazu genutzt, um eine gute Anlage des Rings in der als auch an der Zylinderwandung zu erhalten.

Neben den Vorteilen des Rings im Betrieb, besteht jedoch das Problem, daß der Ring nur schwer montierbar ist. So treten sowohl beim Einbau des Rings in die Kolbennut, als auch beim Einbau des bestückten Kolbens in die Zylinderbohrung Probleme auf.

Durch die große Flexibilität des Rings ist eine automatisierte Montage des Rings wirtschaftlich nur dann möglich wenn die Stoßenden des Rings gegeneinander arretiert werden. In der Praxis hat man deshalb bereits eine sich am Nutgrund des U-förmigen Raumes abstützende Zugfeder eingelegt, die den Ring in Umfangsrichtung stabilisiert, aber keine axiale Abstützung übernimmt. Der Nachteil daß diese Zugfeder nach dem Einbau des Kolbenrings im Motor verbleibt. Auf diese Weise wird einerseits die gute Flexibilität des Rings beeinträchtigt, zum anderen leitet diese Feder unerwünschte Kräfte, insbesondere im Stoßbereich, ein.

Zum Einbau des fertig bestückten Kolbens in die Zylinderbohrung muß der Kolbenring in Umfangsrichtung zusammengedrückt werden. Hierbei läßt sich eine Durchbiegung der Schenkel in axialer Richtung nicht vermeiden, da der Verformungswiderstand der Schenkel, bezogen auf eine tangentiale Biegeachse, in der Regel geringer ist, als der Verformungswiderstand, der etwa rechtwinkelig dazu verlaufenden Stege. Derartige Verformungen der Schenkel verhindern eine dichte Anlage an den Kolbennutflanken, wodurch der Verschleiß erhöht wird. Darüber hinaus können die Schenkel beim Eindrücken des Kolbens in die Zylinderbohrung beschädigt werden, wenn nämlich die Schenkel mit dem Rand der Zylinderbohrung in Kontakt kommen. Die auf diese Weise verbogenen Schenkel führen unweigerlich zu hohen Ölverbräuchen.

Der Erfindung liegt die Aufgabe zugrunde, einen gattungsgemäßen Kolbenring dahingehend zu verbessern, daß die Montage des Kolbenrings erleichtert und die Gefahr von Beschädigungen am Kolbenring vermindert wird.

Diese Aufgabe wird erfindungsgemäß durch die kennzeichnenden Merkmale des Patentanspruchs 1 gelöst.
Vorteilhafte Ausgestaltungen der Erfindung sind in den Unteransprüchen dokumentiert.

Durch den erfindungsgemäßen Ölabstreifkolbenring werden bei der Montage die empfindlichen Schenkel des Kolbenrings von der Zylinderoberkante ferngehalten und darüber hinaus wird jedes einzelne Schenkelsegment vom Kunststoffring axial abgestützt und so gegen Verbiegen geschützt. Während des ersten Anlaufen des Motors übernimmt der Kunststoffring die Funktion des Ölabstreifkolbenrings, jedoch verschleißt der Kunststoffring, sowohl durch Temperatureinfluß, als auch durch Einwirkung des Motoröls sehr schnell, bzw. löst sich vollständig auf. Dadurch wirkt der Ölabstreifkolbenring wie bisher bekannte Ringe.

Die Erfindung ist anhand eines Ausführungsbeispieles in der Zeichnung dargestellt und wird im folgenden näher erläutert. Es zeigen:
- Fig. 1: perspektivische Ansicht eines erfindungsgemäßen Kolbenrings
- Fig. 2: Ansicht eines eingebauten Kolbenrings im Kolben, während des Einbaus in die Zylinderbohrung

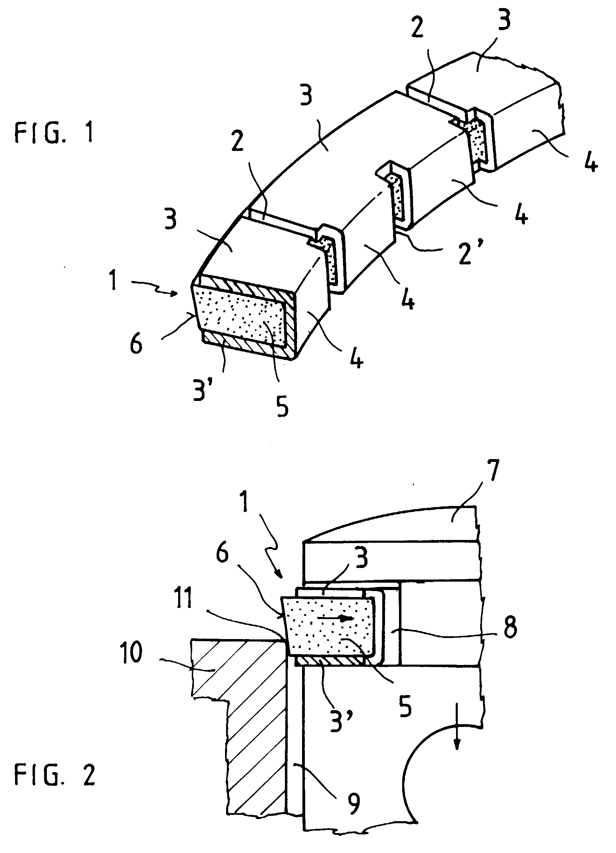

Die Figur 1 zeigt einen erfindungsgemäßen Ölabstreifkolbenring 1 aus einem ringförmig gebogenen Metallband aus Stahl. Der Ölabstreifkolbenring 1 weist abwechselnd von unten und oben nach innen sich erstreckende Einschnitte 2, 2' auf, so daß die radial gerichteten federnden Schenkel 3, 3' über Stege 4 verbunden sind. Im U-fömigen Querschnittsprofil ist ein Montagehilfsring 5 aus Kunststoff eingelegt. Der Montagehilfsring 5 ist in seiner radialen Erstreckung so ausgelegt, daß er die Außendurchmesser der Schenkel 3, 3' überragt und zwar um etwa 0,1 bis 0,2 mm. Der Montagehilfsring 5 ist an der Außenumfangsfläche 6 konisch ausgebildet und zwar so, daß in Einbaurichtung des bestückten Kolbens ein Einführkonus gebildet ist.

In der Figur 2 ist ein mit dem erfindungsgemäßen Ölabstreifkolbenring 1 bestückter Kolben 7 dargestellt. Der zuvor in Umfangsrichtung zusammengedrückte Ölabstreifkolbenring 1 weist in der Nut 8 des Kolbens 7 genügend radiales und axiales Spiel auf, so daß beim Einschieben des Kolbens 7 in die Zylinderbohrung 9 des Zylinders 10 zunächst die konische Außenumfangsfläche 6 an den Rand 11 der Zylinderbohrung 9 stößt. Der Ölabstreifkolbenring wird auf diese Weise in radialer Richtung in die Nut 8 gedrückt, ohne daß die Schenkel 3' mit dem Rand 11 in Berührung kommen. Ein Verbiegen der Schenkel (3, 3') ist somit ausgeschlossen. Der aus Kunststoff gebildete Montagehilfsring 5 gleitet nun wenige Hübe in der Zylinderbohrung 9 und verschleißt bzw. löst sich innerhalb kürzester Zeit vollständig auf und die Schenkel 3, 3' können ihre abstreifende Funktion übernehmen.

## Patentansprüche

1. Ölabstreifkolbenring für Brennkraftmaschinen, bestehend aus einem ringförmig gebogenem Metallband mit einem nach radial außen hin offenen U-förmigen Querschnittsprofil und vom Außendurchmesser abwechselnd von oben oder von unten nach innen sich erstreckende Einschnitte, so daß radial gerichtete federnde Schenkel bebildet sind, die über Stege miteinander verbunden sind, dadurch gekennzeichnet, daß ein im Betrieb der Brennkraftmaschine sich auflösender Montagehilfsring (5) aus Kunststoff innerhalb des durch das U-förmige Querschnittsprofil gebildeten Raumes angeordnet ist, wobei der Außendurchmesser des Montagehilfsringes (5) den Außendurchmesser der Schenkel (3, 3') überragt, so daß im eingebauten Zustand der Montagehilfsring (5) in Gleitkontakt mit der Zylinderwand gelangt.

2. Ölabstreifkolbenring nach Anspruch 1, dadurch gekennzeichnet, daß der Montagehilfsring (5) mit axialen Spiel im Bereich von 10 bis 100 µm im Ölabstreifkolbenring (1) angeordnet ist.

3. Ölabstreifkolbenring nach den Ansprüchen 1 und 2, dadurch gekennzeichnet, daß der Montagehilfsring (5) den Außendurchmesser der Schenkel (3, 3') zwischen 0,1 bis 00,2 mm überragt.

4. Ölabstreifkolbenring nach Anspruch 1 bis 3, dadurch gekennzeichnet, daß der Kunststoff auf Basis Polyvenyl-Acetat oder Polyvenyl-Alkohol gebildet ist.

5. Ölabstreifkolbenring nach Anspruch 1 bis 4, dadurch gekennzeichnet, daß die Außenumfangsfläche (6) des Montagehilfsringes (5) konisch ausgebildet ist.

6. Ölabstreifkoolbenring nach Anspruch 1 bis 4, dadurch gekennzeichnet, daß die Außenumfangsfläche (6) des Montagehilfsringes (5) ballig ausgebildet ist.
